# EUROPÄISCHE PATENTANMELDUNG

(11) **EP 1 191 547 A1**
(43) Veröffentlichungstag der Anmeldung: **27.03.2002**
(21) Anmeldenummer: 00402595.3
(22) Anmeldetag: 20.09.2000
(51) Int. Cl.: H01B 7/28

(54) **Langgestreckter Gegenstand**

(71) Anmelder: Nexans, 75008 Paris (FR)
(72) Erfinder: Müller, Friedrich, Dipl.-Ing., 91207 Lauf (DE); Widawski, Gilles, 75011 Paris (FR); Rietz, Andreas, Dipl.-Ing., 90403 Nürnberg (DE)
(74) Vertreter: Döring, Roger, Dipl.-Ing.

(57) **Zusammenfassung**

Es wird ein langgestreckter Gegenstand mit mindestens einem in einer Seele desselben angeordneten Übertragungselement angegeben, bei welchem über der Seele ein äußerer Mantel (3) aus Isoliermaterial angebracht ist. Zur Erzielung spezieller Eigenschaften des Mantels (3) ist derselbe von einer im Verhältnis zu seiner Dicke sehr dünnen Schicht (4) aus vernetzbarem Isoliermaterial umgeben, dessen individuelle Eigenschaften entsprechend dem jeweiligen Verwendungszweck des Gegenstandes eingestellt sind.

## Beschreibung

Die Erfindung bezieht sich auf einen langgestreckten Gegenstand mit mindestens einem in einer Seele desselben angeordneten Übertragungselement, bei welchem über der Seele ein äußerer Mantel aus Isoliermaterial angebracht ist.

"Langgestreckter Gegenstand" im Sinne der Erfindung können elektrische Kabel oder Leitungen, optische Kabel oder Leitungen oder Rohrleitungen sein. Das Übertragungselement ist dementsprechend ein elektrischer Leiter, ein optischer Leiter oder ein Rohr zum Fortleiten von Fluiden. Alle diese Gegenstände sind seit vielen Jahren bekannt und im Handel erhältlich. Sie haben als gemeinsames Merkmal einen äußeren Mantel aus Isoliermaterial, wie beispielweise Polyethylen oder Polyvinylchlorid. Da das durch die Erfindung zu lösende Problem in allen Fällen das gleiche ist, beziehen sich die weiteren Ausführungen auf Kabel, stellvertretend auch für Leitungen und Rohrleitungen.

Kabel werden zumindest in ihrer Seele so aufgebaut, daß sie für ihren Verwendungszweck bestens geeignet sind. Das gilt grundsätzlich auch für den äußeren Mantel. Bei dessen Material müssen aber oft Kompromisse bezüglich seiner Eigenschaften eingegangen werden, da beispielsweise ein elektrisch günstiges Material nicht geeignet sein muß, wenn das Kabel in rauher Umgebung eingesetzt werden soll, in der es beispielsweise großer Reibung oder chemischen Einflüssen ausgesetzt ist. Ein solches Einsatzgebiet ist beispielsweise der Fahrzeugbau. Das Isoliermaterial des Mantels muß dann insbesondere abriebfest und beständig gegen Öl und Benzin sein. Für andere Einsatzzwecke des Kabels benötigt der Mantel wieder andere Eigenschaften, wie beispielsweise gute Gleitfähigkeit und eine harte Oberfläche oder Wärmebeständigkeit und gutes Brandverhalten. Für die unterschiedlichen Einsatzfälle erhalten die Kabel auch dann, wenn eine identische Seele vorhanden ist, Mäntel aus unterschiedlichen Materialien, die in vielen Fällen auch mit unterschiedlichen Maschinen auf die Seele aufgebracht werden.

Der Erfindung liegt die Aufgabe zugrunde, das eingangs geschilderte Kabel so zu gestalten, daß es mit geringem Aufwand an unterschiedliche Erfordernisse anpaßbar ist.

Diese Aufgabe wird gemäß der Erfindung dadurch gelöst, daß der Mantel von einer im Verhältnis zu seiner Dicke sehr dünnen Schicht aus vernetzbarem Isoliermaterial umgeben ist, dessen individuelle Eigenschaften entsprechend dem jeweiligen Verwendungszweck des Kabels eingestellt sind.

Ein solches Kabel kann ohne Einschränkung nur für seinen jeweiligen Übertragungszweck aufgebaut werden. Das gilt nach wie vor für die Seele mit mindestens einem Übertragungselement und insbesondere für den Mantel, dessen Material beispielsweise ausschließlich für spezielle Eigenschaften ausgewählt wird. Unabhängig vom späteren Einsatz können alle Kabel mit einem gleichen äußeren Mantel ausgerüstet werden. Jedes Kabel wird abschließend mit einer sehr dünnen Schicht versehen, durch welche es im vorgesehenen Einsatzgebiet verwendbar ist. Die Schicht ist im Verhältnis zur Dicke des Mantels sehr dünn, so daß der Außendurchmesser des Kabels nur unwesentlich vergrößert wird. Das Material der Schicht kann problemlos für die Eigenschaften eingestellt werden, die der Mantel des Kabels außen haben soll, also beispielweise hohe Abriebfestigkeit oder Ölbeständigkeit. Für die Schicht wird jeweils nur wenig Material benötigt. Sie kann mit an sich bekannten Verfahren auf den Mantel des Kabels aufgebracht werden.

Ausführungsbeispiele des Erfindungsgegenstandes sind in den Zeichnungen dargestellt.

Es zeigen:

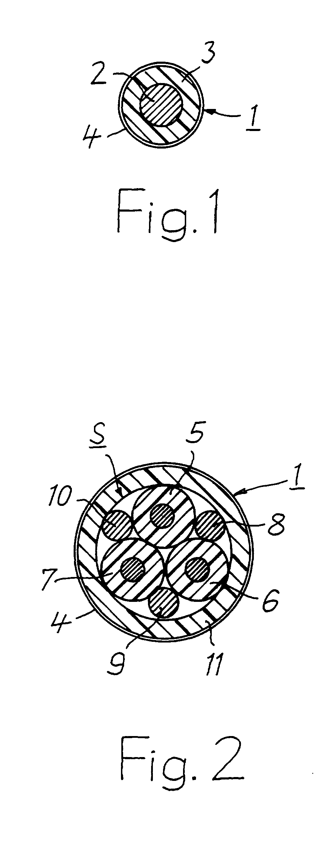

Fig. 1 und 2 Querschnitte von zwei unterschiedlichen Kabeln gemäß der Erfindung.

Das Kabel nach der Erfindung hat mindestens ein Übertragungselement, das im Falle einer elektrischen Übertragung aus einem Leiter und einer denselben umgebenden Isolierung und im Falle einer optischen Übertragung aus einer Glasfaser mit Schutzschicht besteht. In diesem einfachsten Fall entsprechen die Isolierung bzw. die Schutzschicht dem Mantel, auf den die sehr dünne Schicht aufgebracht wird. Ein Kabel kann auch zwei oder mehr Übertragungselemente enthalten, von denen jedes mit der sehr dünnen Schicht ausgerüstet ist. Bei zwei oder mehr Übertragungselementen kann aber auch ein dieselben umgebender gemeinsamer Mantel verwendet werden, auf den die sehr dünne Schicht aufgebracht wird.

Das Kabel 1 nach Fig. 1 hat nur ein Übertragungselement. Das besteht aus einem Kupferleiter 2 und einer über demselben angebrachten Isolierung, die gleichzeitig Mantel 3 des Kabels 1 ist. Über dem Mantel 3 ist eine Schicht 4 aus vernetzbarem Isoliermaterial angebracht, das ganz spezielle, äußere Einflüsse berücksichtigende Eigenschaften hat. Die Schicht 4 ist sehr dünn im Verhältnis zur Dicke des Mantels 3. Ihre Dicke liegt zwischen 5 µm und 300 µm, vorzugsweise zwischen 5 µm und 50 µm. Der Mantel 3 kann eine Wandstärke haben, die beispielsweise zwischen 0,2 mm und 0,8 mm liegt.

Das in Fig. 2 dargestellte Ausführungsbeispiel zeigt ein Kabel 1 mit Übertragungselementen, die im folgenden als Adern bezeichnet werden. Es hat drei Adern 5, 6 und 7, die miteinander verseilt sein können. In den Zwickeln zwischen den Adern 5, 6 und 7 liegen Füllelemente 8, 9 und 10, damit die aus Adern und Füllelementen bestehende Seele S des Kabels 1 eine möglichst kreisrunde Umfangsfläche hat. Die Seele S ist von einem äußeren Mantel 11 aus Isoliermaterial umgeben. Er besteht beispielsweise aus Polyethylen. Soweit ist ein herkömmliches elektrisches Kabel 1 mit drei Übertragungselementen beschrieben, dessen Aufbau hier grundsätzlich nicht von Bedeutung ist. Über dem Mantel 11 ist wieder die Schicht 4 aufgebracht, die sehr dünn ist im Verhältnis zur Dicke des Mantels 11. Die Schicht 4 hat wieder vorzugsweise eine zwischen 5 µm und 50 µm liegende Dicke. Die Wandstärke des Mantels 11 kann beispielsweise zwischen 0,2 mm und 1,2 mm liegen.

Die Schicht 4 kann bei der Herstellung des Kabels 1 im gleichen Arbeitsgang auf den Mantel 3 bzw. 11 aufgebracht werden. Sie kann aber auch später auf denselben aufgetragen werden.

Das Material der Schicht 4 ist vernetzbar, insbesondere durch den Einsatz von ultraviolettem Licht. Sie kann dazu beispielsweise als lösungsmittelfreier Lack auf den Mantel 3 bzw. 11 aufgebracht und danach durch Bestrahlung mit UV-Licht vernetzt werden. Die Schicht 4 kann beispielsweise durch Sprühen, Tauchen, Abstreifen oder Vacuumlackieren auf den jeweiligen Mantel 3 bzw. 11 aufgebracht werden. Geeignete Materialien für die Schicht 4 sind beispielsweise Lacke auf der Basis von Polyester, Polyalkohol, Polyurethan oder Polyacrylat.

Die Fertigungsgeschwindigkeit bei der Herstellung des Kabels 1 hängt ab von den Abmessungen und dem sonstigen Aufbau desselben. Sie kann einschließlich der Erzeugung der Schicht 4 beispielsweise bis zu 1000 m/min betragen. Die für die Vernetzung bzw. Aushärtung des Materials der Schicht 4 benötigte Zeit soll möglichst kurz sein, beispielsweise zwischen 0,5 s und 1,0 s. Das kann beispielsweise durch einen UV-Strahler mit entsprechend hoher Leistung oder durch zwei oder mehr UV-Strahler erreicht werden.

Unabhängig vom Aufbau der Seele S und dem Material des Mantels 3 bzw. 11 kann das Kabel 1 durch die Schicht 4 beispielsweise folgende Eigenschaften erhalten:

Gutes Gleitverhalten - Abriebfestigkeit - Beständigkeit gegen Öl und Benzin - Beständigkeit gegen chemische Einflüsse - Bedruckbarkeit - Wärmebeständigkeit - Flammfestigkeit - Kratzfestigkeit - antistatisches Verhalten - Farbe.

## Patentansprüche

1. Langgestreckter Gegenstand mit mindestens einem in einer Seele desselben angeordneten Übertragungselement, bei welchem über der Seele ein äußerer Mantel aus Isoliermaterial angebracht ist, **dadurch gekennzeichnet, daß** der Mantel (3,11) von einer im Verhältnis zu seiner Dicke sehr dünnen Schicht (4) aus vernetzbarem Isoliermaterial umgeben ist, dessen individuelle Eigenschaften entsprechend dem jeweiligen Verwendungszweck des Gegenstandes eingestellt sind.

2. Gegenstand nach Anspruch 1, **dadurch gekennzeichnet, daß** die Schicht (4) zwischen 5 µm und 300 µm dick ist.

3. Gegenstand nach Anspruch 2, **dadurch gekennzeichnet, daß** die Schicht (4) zwischen 5 µm und 50 µm dick ist.
